# EUROPEAN PATENT SPECIFICATION

(11) **EP 1 239 736 B1**
(45) Date of publication and mention of the grant of the patent: **08.03.2006**
(21) Application number: 00984312.9
(22) Date of filing: 14.12.2000
(51) Int. Cl.: A23B 9/02, A23L 1/185

(54) **METHOD FOR MALTING SEEDS**
VERFAHREN ZUR MALZUNG VON SAATGUT
PROCEDE DE MALTAGE DE GRAINS

(30) Priority: 15.12.1999 US 461890
(43) Date of publication of application: 18.09.2002
(73) Proprietor: Cargill Incorporated, Minneapolis, MN 55440 (US); Cargill N.V., 2030 Herent (BE)
(72) Inventor: DELRUE, Rita, M., B. 3020 Herent (BE); COPPENS, Theo, B-3120 Tremelo (BE)
(74) Representative: HOFFMANN EITLE
(86) International application number: PCT/US2000/033784
(87) International publication number: WO 2001/047364

(56) References cited:
- EP-A- 0 622 085
- WO-A-00/25595
- WO-A-00/45646
- WO-A-97/38734
- DD-A- 121 798
- DE-A- 19 605 650
- DE-C- 207 724
- DE-C- 820 840
- US-A- 1 750 508
- US-A- 2 801 176
- US-A- 3 212 904
- US-A- 5 738 892
- US-A- 5 811 143
- US-A- 6 086 935
- PATENT ABSTRACTS OF JAPAN vol. 001, no. 070 (C-019), 8 July 1977 (1977-07-08) & JP 52 034987 A (KIKKOMAN CORP), 17 March 1977 (1977-03-17)
- DATABASE WPI Section Ch, Week 197724 Derwent Publications Ltd., London, GB; Class D16, AN 1977-43024Y XP002163666 & SU 535 343 A (VORON TECHN INST), 12 December 1976 (1976-12-12)
- PATENT ABSTRACTS OF JAPAN vol. 009, no. 145 (C-287), 20 June 1985 (1985-06-20) & JP 60 027355 A (TOKIWA SHIYOKUHIN:KK), 12 February 1985 (1985-02-12)
- DATABASE WPI Section Ch, Week 198741 Derwent Publications Ltd., London, GB; Class D16, AN 1987-290204 XP002163667 & SU 1 296 569 A (KAZGIPROPISHCHEPRON), 15 March 1987 (1987-03-15)
- PATENT ABSTRACTS OF JAPAN vol. 1996, no. 12, 26 December 1996 (1996-12-26) & JP 08 205806 A (FUJIWARA TECHNO ART:KK), 13 August 1996 (1996-08-13)
- DATABASE WPI Section Ch, Week 198819 Derwent Publications Ltd., London, GB; Class D16, AN 1988-132011 XP002163668 & SU 1 344 779 A (KAUN POLY), 15 October 1987 (1987-10-15)

## Description

The present invention generally relates to a method for malting seeds, such as barley seeds and other cereals, such as wheat and sorghum seeds, legumes and pseudo-cereals. More particularly, the method includes reducing the microbial count of the seeds prior to malting and prior to adding a starter culture for the malting process.

Heat and moisture are applied onto the particulate seeds to provide a heated moist environment which provides surface moisture on the seeds during the application of heat. Heat is applied for a time and temperature sufficient to reduce the microbial load of the seeds or other malting seeds without affecting or minimally affecting, the loss of the ability of the seeds to germinate and undergo a malting process.

### BACKGROUND OF THE INVENTION

Barley and other seeds, such as wheat and sorghum, are used for the production of beverages, such as beer. In most cases, a seed is subjected to a malting process to increase enzymatic activity. These enzymes, such as amylases, betaglucanase and xylanase enzymes, degrade the starch and non starchy components from the seeds to prepare them to be used in processes such as brewing. In known malting processes, the moisture content of a seed, such as barley, is raised by immersion of the barley seeds in water. Thereafter, the barley with a high moisture content is allowed to germinate to provide a green malt. After germination, the green malt is dried under specific conditions. The final malt is cleaned to remove, for example, the sprouts and dust. Thereafter, it is used in processes, such as brewing, milling or other fermentation processes.

Barley and seeds contain naturally occurring microorganisms. Generally, the quality of the malt and the beverage derived therefrom can be affected by the presence of microorganisms naturally present on and in the barley and other seeds. Some microorganisms positively affect malting, some do not. Generally, these microorganisms are further developed and grown during the malting process. During microorganism growth, metabolites can be produced, some of which are known to negatively influence the quality of the final malt. For example, some molds such as Fusarium can produce vomitoxin (= deoxynivalenol, often referred to as DON). DON is a harmful mycotoxin and levels of that mycotoxin should be kept as low as possible. It is believed mold or yeast strains developed or grown during the germination process also produce proteins which are claimed to cause gushing in beer produced from that malt. Moreover, other products formed by microorganisms during germination can be polysaccharides which are believed to cause early flocculation of yeast during fermentation in the brewing of the malted seeds. Hence, many microorganisms adversely affect the malting process and/or adversely affect the quality of the beverage which is made from the seeds, such as barley.

Further, mycotoxins and/or other metabolites can be produced during the malting process. Indeed, malting process conditions from steeping to drying are such, that they encourage microbial growth and development and enhance the production of metabolites. And even though these metabolites originally present on the seed before the process generally are removed with the steep water after steeping, not all of the microorganisms and metabolites are removed. Moreover, after steeping and during the germination process and the first phase of the drying process, microorganisms can again develop and produce these metabolites.

A lower initial microbial count in seeds which undergo a malting process would not only reduce the level of undesirable microorganisms in the seeds, but also could prevent the production of metabolites of those microorganisms. A treatment lowering microbial count must be balanced so as not adversely affect the ability of the barley and other seeds to germinate, nor to destroy viable seed tissues critical to obtaining a good quality malted seeds. Hence, the embryo in the barley and other seeds should not be so adversely affected so that they will not be metabolically inactivated and will not germinate and produce, for example, enzymes as part of the malting process.

WO 00/25595 discloses a method of treating cereal kernels to decrease their mould content, characterized by exposing the kernels to heat at such a temperature and forsuch a period of time that the mould content of the kernels decreases but germinability remains, whereby the temperature of the kernels to be treated is raised to 60 to 100°C for 0.5 to 30 seconds. This document represents prior art according to Article 54(3) EPC.

### OBJECTS OF THE INVENTION

An object of the invention is to provide an improved preparation process for making malted seeds and to improve the malted seeds product of such process.

Another object of the invention is to provide a process and improved malted seed which vary less in quality with the raw material used.

Additional objects of the invention will become apparent with reference to this specification.

### SUMMARY OF THE INVENTION

The invention provides a process or method of malting seeds selected from the group consisting of cereals, such as barley, wheat, rye, corn, oats, rice, millet and sorghum, pseudo-cereals, such as buckwheat, amaranth and legumes, such as soy. The process of the invention includes reducing the microbial level in the seed prior to steeping and malting and also comprises the introduction of a starter culture used in the malting process,
wherein said starter culture does not consist of lactic acid bacteria.

According to the invention, the reduction of microbial levels permits efficient use of starter cultures, such as molds, yeasts, bacteria, spores and activated spores. The invention also promotes malting without competition from microorganisms naturally present on the seeds before malting which not only negatively influence the malting process and the quality of the final malt, but also the quality of the products derived from the malted seeds. In an important aspect, the invention provides a method for malting barley, sorghum and wheat, and in a very important aspect, barley. In another important aspect, the invention includes the addition of a starter culture, such as spores or activated spores, after the reduction of the microbial load. In the latter aspect, a starter culture, such as activated spores, provides increased enzymatic activity which is enhanced by reducing the microbial level in the seeds prior to the malting process. The increase of enzymatic activity may be due to reduced competition between the starter culture and the natural occurring microorganisms which have been reduced during the treatment, as well as possible changes in the surface properties of the seeds that permit a better adhesion of a starter culture on the seeds. In yet another important aspect, the process contemplates a continuous treating of the seeds prior to the addition of the starter culture and continuation of the malting process.

The method of the invention is unique in that it may be continuous and does not require increased pressures with sealed containers. The seeds are heated with moist heat and moisture on the surface of the seeds. Care should be taken not to over expose the seeds to the moist heat and/or over expose the seeds to moisture prior to heating because the seeds should not be cooked. Over exposing the seeds to moisture prior to heat will hydrate the seeds below the surface of the seeds and then the moist heat, such as steam, will tend to over heat the seeds, "cook" them and reduce their ability to germinate and sprout during the malting process. It is surface moisture on the surface of the seeds coupled with heating which is important in reducing the microbial content of the seeds without substantially adversely affecting the ability of the seeds to germinate and to produce enzymes which are sought through the malting process. Moist heat is applied by a fluid or fluidum which includes heated water or steam having a temperature in the range of about 60°C to about 200°C.

The method of the invention will reduce the microbial count of the seeds, such as barley and wheat, by at least about five (5) times per gram of product for molds and 1 x 10² per gram for yeasts, and in an important aspect by at least 1 x 10³ per gram of product for molds and 1 x 10⁴ per gram of product for yeasts. Further, the method of the invention is practiced without the necessity of pressurizing the heating vessel to pressures substantially above one atmosphere or atmospheric conditions.

The method includes exposing the seeds to moist heat for a time and temperature that will reduce the microbial count, such as yeast and mold microbes, of the seeds by at least about a factor of five (5) per gram of seed, but will not reduce the germination energy of the seed after about 72 hours to less than about 80%. In general this means that seeds, such as barley and wheat, should be heated with surface moisture on the seeds for from about one to about thirty seconds at a temperature in the range of from about 50°C to about 90°C and preferably from about 60°C to about 90°C. Temperature can be conveniently measured by placing a thermometer in the seed bulk. In one important aspect, the seed is a continuously moving stream of seeds. Where it is heated in a moist environment when it is a continuous moving stream, the seeds may be conveyed through a tube-like conduit via paddles where steam having a temperature of from about 100°C to about 200°C is injected through the paddles onto the seeds and increase the moisture content on the seeds. As the seeds go through the conduit, they have steam directly injected onto them which moisturizes and heats the surface of the seeds. The important function of the steam is to provide an amount of surface moisture on the malting seeds which with the heat will kill undesirable microorganisms, but not adversely affect the ability of the seed to sprout and germinate. In this aspect, the steam is effective for heating the seeds to a temperature of at least about 50°C, and in an important aspect, heats the seeds from about 60 to about 90°C as they leave the conduit, the seeds residing from about 1 to about 45 seconds, and preferably 3-30 seconds in the conduit. The conduit also may have a heat source (additional to the directly injected steam) which is a jacket which substantially surrounds the conduit throughout its length where the jacket is heated such as by steam, oil, electrically or any other suitable means for heating. The heated jacket indirectly heats the seed.

In another important aspect of the invention where the seeds are treated when continuously moving as a stream, the seeds are conveyed on a pervious belt and has steam having a temperature of from about 100°C to about 200°C injected onto them as they proceed along the belt. In this aspect, the steam is applied to the surface of the seeds which are heated to at least about 50°C, and in an important aspect, the seeds are heated to about 65°C to about 85°C as they leave the belt, the seeds residing about 3 to about 30 seconds on the belt.

In another aspect, the seeds may be immersed in water at about 65°C to about 90°C for about 1 to about 20 seconds for good results.

The temperature of the heat source and time of exposure of the seeds to the heat source is a function of the sensitivity of the seeds to heating such that the time and temperature are effective for reducing the microbial count in the seeds by at least about a factor of five per gram of seeds, and the seed does not lose any substantial functionality for the malting process. The combination of the temperature of the heat source, steam injection, surface moisture and time of exposure of the seeds to the heat source, however, should be effective to heat the seed to at least 50°C and reduce the yeast and mold count by at least about a factor of five per gram of seed after the seeds are conveyed through the moist heat as described below.

The process of the invention can also include cooling the seeds after heating the seeds with moist heat to cool the seeds down and to ambient temperature. The heating can permit prolonged storage of the seeds with reduced microbial count.

### DESCRIPTION OF THE DRAWING

Figure 1 is a schematic diagram of an apparatus which can be used to practice the invention.
Figure 2 is a side view of the conduit in the apparatus shown in Figure 1.

### DETAILED DESCRIPTION

### Definitions

As used herein, the term "spore" refers to a dormant and highly resistant reproductive cell formed by bacteria and fungi in response to environment conditions that do not favor the growth of the organism. When exposed to favorable environmental conditions, spores are capable of developing into a viable adult organism without fusion with another cell.

As used herein, the term "activated spore" means a spore having one of the following properties.
I. The spore is swollen such that its size is increased by a factor of between about 1.2 and about 10 over its dormant size; and/or
II. One or more germ tubes per spore is formed. Activated spores are prepared by one or a combination of the following treatments:
   i. Cycles of wetting and/or drying;
   ii. Addition of appropriate nutritional supplies (such as a nitrogen source, preferably amino acids and/or a carbon source, preferably mono-or disaccharides) or spore elements;
   iii. Exposure to temperature changes, preferably within a temperature range of about 0° to about 80°C.
   iv. Exposure to changes in pH, preferably within a pH range of about 2.0 to about 8.0, more preferably about 3.0 to about 6.0.

The term "germination" as used herein means the beginning or resumption of growth by a seed. In accordance with the process of the present invention, germination begins to occur during and/or after the seeds have been steeped. Germination of seed is generally understood to mean hydration of the seeds, swelling of the seeds and inducing growth of the embryo. Environmental factors affecting germination include moisture, temperature and oxygen level. Root and shoot development are observed.

As used herein, the term "steeping" refers to wetting of the seeds. Wetting may include one or more stages over a time and temperature effective for providing a moisture content of between about 20% and about 60% by weight.

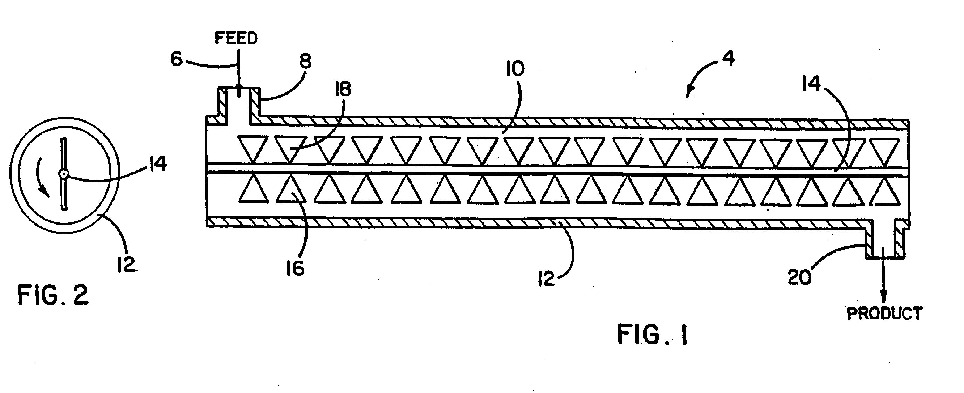

In one embodiment of the invention, the seeds for malting are fed into a elongated heating device 4 which is shown in figure 1. The seeds are fed into the heating device from hopper 6 through feed aperture 8 into channel 10. The seeds are conveyed down channel 10 in the y direction. Channel 10 is surrounded by a steam jacket 12 through which steam may be circulated. A hollow rod 14 extends longitudinally down the center of the channel. A plurality of paddles 16 are mounted on the rod 14 down its longitudinal length. The rod 14 is rotated and the paddles are angled such that as the rod rotates the paddles, the paddles mix the seeds and push the seed down channel 10. The paddles have openings 18 from channels which extend through the paddles to the hollow center of rod 14. These openings transmit steam going through the rod and paddles so that the steam may be injected onto the seeds being transmitted down channel 10. As the rod rotates, the paddles push the seed down the conduit to exit aperture 20 through which the seeds with the microbial reduced load drops. The openings in the paddles may be opened or closed to control steam injection onto the seeds being transmitted down the channel. In one aspect of the invention, some of the openings in the paddles towards the feed input end of the channel are open to transmit steam from the hollow rotating rod 14 onto the seeds. Steam can be supplied through the rod and through the paddles onto the to-be-treated particulate seeds. The amount of steam injected is effective for providing a moist environment, increasing the moisture content on the surface of the seeds and to heat the product as described above. Additional indirect heating of the particulate seeds may be done by using indirect heat from the jacket of the device. Just enough steam is injected to provide moisture on the surface of the to be treated particulate seeds. With the moisture and heat from the steam and the indirect heat from the jacket heat source of the device, the conditions are sufficient to kill microorganisms at the surface of the seeds without substantially reducing the ability of the seeds to germinate. The higher moisture content, the heat and the time of exposure of the seeds to the heat must be limited to prevent the functional properties of the cereal to be negatively influenced. A device which can be used to treat the particulate seed as described herein is available as a Solidaire Model SJCS 8-4 from the Hosokawa Bepex Corporation, 333 N.E. Taft Street, Minneapolis, Minnesota 55413, but the invention is not limited to such a device or a device with paddles for the injection of steam.

The rotating paddles as vehicles for injecting steam, assure that the steam is uniformly distributed over the surfaces of the seeds, but not into the seed particle. It is important that there is sufficient mixing of the seeds during the treatment that the surfaces of the seeds are moist and achieve a temperature of at least about 50°C.

The starter culture, such as spores and/or activated spores, can be introduced before or during the various germination or steeping stages. For example, activated spores can be introduced during the various germination or steeping stages. In the case of activated spores, the concentration of the spores vary depending on the conditions of the malting process and the type of active spore being utilized. Generally about 1 x 10² to about 1 x 10⁷, preferably about 1 x 10³ to about 1 x 10⁵ activated spores per gram air dry seed is utilized.

The seed after the steam and heat treatment then is wetted and mixed with a starter culture which may be combined with the seeds either before or after wetting. When the invention utilizes a starter culture, such as spores or activated spores from microoganisms, such as bacteria or molds, a surprising increase in enzymatic activity of the malted seeds results. In this aspect, the process generally comprises combining water, the seeds and activated spores and holding the combination until seeds of enhanced enzymatic activity is formed. Generally, the combination is made by inoculating the moistened seeds with the activated spores, but as previously noted, the spores or activated spores and seeds may be combined before or after the moistening of the seeds, but after reducing the microbial count of the seeds. In the process of the invention, the combination of wetted seeds and starter culture has a concentration of starter culture, holding time and holding temperature which are effective for providing the seeds with an increase in enzymatic activity of at least one enzyme, such as β-glucanase, xylanase, amylases, debranching enzymes, proteases and/or other naturally occurring enzyme activities, which are greater than the enzymatic activity which is obtained by holding the wetted seeds without the reduced microbial count and without a starter culture, such as activated spores.

In this aspect, the seed, spores or activated spores are combined before or after the time of wetting the seeds and the combination is held at a temperature of at least about 5°C and not more than about 30°C, preferably between about 10°C to about 20°C and the activated spores are at a concentration in the combination to obtain an increase in enzymatic activity of the malted seeds. The wetted or moistened seeds and activated spore combination is held for a time and temperature until the seeds have a moisture content of at least about 20 weight percent. The moistened seeds and activated spores are held together until the seeds have a moisture content of between about 20 to about 60 weight percent, preferably from about 38 to about 47 weight percent, and are allowed to germinate for about 2 to about 7 days, preferably about 3 to about 6 days, at a temperature of from about 10° to about 30°C., preferably from 14° to about 21°C. In important aspect, the germinated seeds are dried at a temperature of from about 40° to about 150°C, preferably between about 45° and 85°C until the dried malted seeds have a moisture content of from about 2 to about 15 weight percent moisture, preferably from about 3 to about 7 weight percent moisture.

Microorganisms, spores, and activated spores which may be used in the invention may be from the microbes selected from the group comprising of Enterococcus spp., Micrococcus spp., Pediococcus spp., Leuconostoc spp., Lactobacillus spp., Brevibacterium spp., Corynebacterium spp., Propionibacterium spp., Bacillus spp., Acetobacter spp., Pseudomonas spp., Pichia spp., Sacchaaromyces spp., Zygosaccharomyces spp., Hanseniaspora spp., Rhodotorula spp., Torulopsis spp., Trichosporon spp, Kloeckera spp., Candida spp., Geotrichum spp., Neurospora spp., Monascus spp., Mucor spp., Rhizopus spp., Rhizopus oryzae strain ATCC 9363, Trichoderma spp., Aspergillus spp., Penicillium spp., Amylomyces spp., and mixtures thereof. The scope of the present invention is, however, not limited to the above-mentioned list of microorganisms.

### EXAMPLE 1 - FLUIDIZED BED SYSTEM

Barley was used in the test. Samples of barley were placed in a special device or chamber. Heated moist air was injected into the barley samples. This injection resulted in a fluidization of the barley and a surface treatment to reduce the microbial count. The time is the time in seconds the barley was treated in the chamber. The temperature is the temperature of the barley sample direct after treatment. The barley treated was a US 6-row variety standard used for malting purposes. Samples were analyzed on microbial count such as total aerobic plate count, molds and yeasts. The germination energy was measured according to the B.F. method 3.6.2 Analytic EBC with the addition of 4 ml water. Germination energy of 100 means that all the barley analyzed was germinated after 72 hours.

| Test | Time (sec) | Temp(C) | Germ. Energy 72 hrs. | T.P.C./ Gram | Yeasts/ Gram | Molds/ Gram |
|---|---|---|---|---|---|---|
| 1 | 3 | 67 | 93 | 5.20E+05 | 100 | 2,900 |
| 1b | 3 | 66 | 92 | 4.50E+05 | 350 | 2,300 |
| 2 | 3 | 77 | 90 | 3.50E+05 | 20 | 1,700 |
| 3 | 3 | 77 | 90 | 1.00E+05 | 200 | 1,400 |
| 4b | 3 | 85 | 95 | 2.00E+06 | <10 | 630 |
| 4 | 7 | 85 | 90 | 7.40E+05 | <10 | 210 |
| 5 | 7 | 67 | 90 | 1.60E+06 | 30 | 310 |
| 7 | 7 | 77 | 98 | 1.20E+06 | <10 | 320 |
| 8 | 7 | 87 | 70 | 5.00E+06 | <10 | 170 |
| 9 | 14 | 67 | 85 | 1.80E-06 | <10 | 550 |
| 9b | 14 | 67 | 87 | 1.40E+06 | <10 | 290 |
| 10 | 14 | 78 | 83 | 1.00E+06 | <10 | 160 |
| 11 | 14 | 78 | 71 | 9.30E+04 | <10 | 60 |
| 12 | 14 | 85 | 40 | 5.60E+03 | <10 | 40 |
| 13 | 28 | 67 | 65 | 1.50E+04 | <10 | 580 |
| 14 | 28 | 77 | 25 | 6.00E+02 | <10 | 10 |
| 15 | 28 | 78 | 15 | 8.00E+02 | <10 | 20 |
| 16 | 28 | 85 | 35 | 1.10E+03 | <10 | 650 |
| 16b | 28 | 84 | 15 | 9.70E+03 | 10 | 20 |
| control | | | 95 | 7.60E+07 | 34,000 | 26,000 |

### EXAMPLE II - ROTOR WITH PADDLES

Barley: samples treated with a rotor which includes paddles which inject steam onto the barley being conveyed down a tunnel-like conduit by the rotating paddles.

Control: not steam heat treated.

Sample: steam heat treated.

The barley treated was a 6-row malting barley variety as described in Example I.

Microbial Reduction Treatment: product temperature 60°C., time treatment in the conduit: 10 seconds; direct steam temperature 111°C. Jacket temperature (indirect) 149-150°C.

Microbial content sample:

| | | | |
|---|---|---|---|
| | T.P.C./g | Yeasts/g | Molds/g |
| Control | 670000 | 35000 | 27000 |
| Sample | 50000 | 100 | 2400 |

Malting process: the microbial reduced barley (400 g) was steeped in an erlemeyer flask (2 litre). Barley: water ratio 1:1. The erlemeyer was agitated on an orbital shaker (100 rpm) during the wet stages. During the wet stages the barley was aerated with filter sterilized air. The steeping program was carried out by:
- wet stage, 6 hrs.
- dry stage, 17 hrs.
- wet stage 5 hrs.
- dry stage 16.50 hrs.
- wet stage 2.50 hrs.

After steeping, the germination was carried out in a Joe White micromalting unit using three temperature steps: 14 hours at 20°C., 2 hours at 18°C., 80 hours at 16°C. Kilning was carried out in the same malting unit using 7 temperature steps: 3 hours at 62°C., 2 hours at 65°C., 2 hours at 68°C., 2 hours at 73°C., 1 hour at 78°C., 2 hours at 80°C, 6 hours at 83°C.

DON analysis were done using a GC method.

Malting with a starter culture (S.C.):
Activated spores from Rhizopus oryzae ATCC 9363 were used as starter culture. Activated spores (10.000/per gram dry barley) were added during the first wet steeping cycle.

### DON Analysis on Malted Barley

### DON ppm

| | | Average | st. dev. |
|---|---|---|---|
| Barley | | 3.34 | 0.69 |
| Malt | | | |
| | - Control | 0.53 | 0.69 |
| | - Sample | 0.27 | 0.01 |

| | | Average | st. dev. |
|---|---|---|---|
| Malt | | | |
| | - Control with S.C. | 0.43 | 0.11 |
| | - Sample with S.C. | 0.36 | 0.05 |

2 trials, 2 analyses each
Results show that the steam treated barley gives a lower DON value than the untreated barley and that the standard deviation of the treated barley is much lower.

Results: beta glucanase activity (abs/g dry weight) in the dried malt.

| | 1 | 2 | 3 |
|---|---|---|---|
| Blanc | | 17.78 | 11.89 |
| Test | | 13.06 | 8.57 |
| Blanc with S.C. | 64.57 | 30.96 | 85.78 |
| Test with S.C. | 156.3 | 138.15 | 189.12 |

Results show that the steam treated barley gives with the starter culture an increased level of enzyme activity.

### EXAMPLE III - IMMERSION BARLEY

Barley samples were immersed for different times in water at different temperatures. After immersion, the samples were dried and further analyzed. The barley was 6 Row U.S. barley as described in Example I.

### BARLEY

| Test | Time(s) | Product Temp (C) | Germ. Energy 72 hrs. | T.P.C./g | Molds/g |
|---|---|---|---|---|---|
| 1 | 2 sec | 95 C | 84 | 7300 | 110 |
| 2 | 2 sec | 95 C | 89 | 96000 | 96000 |
| 3 | 5 sec | 95 C | 52 | 800 | 800 |
| 4 | 5 sec | 95 C | 50 | 70 | 70 |
| 5 | 2 sec | 75 C | 89 | 3200000 | 300 |
| 6 | 2 sec | 75 C | 89 | 300000 | 2100 |
| 7 | 5 sec | 75 C | 90 | 190000 | 1100 |
| 8 | 7 sec | 75 C | 86 | 150000 | 210 |
| 9 | 7 sec | 75 C | 93 | 470000 | 150 |
| 10 | 14 sec | 75 C | 90 | 50000 | 1000 |
| 11 | Ctrl | - | 94 | 190000 | 99000 |

### EXAMPLE IV - IMMERSION WHEAT

Wheat samples were immersed for different times in water at different temperatures. After immersion, the samples were dried and further analyzed. The wheat was Stephen a White wheat variety, used for malting purposes.

| Sample | Test | Time(s) | Temp. C. | Germ. Energy % * | T.P.C./ Grams ** | Yeasts/ Grams | Molds/ Grams |
|---|---|---|---|---|---|---|---|
| Wheat | 1 | 3 | 66 | 100 | 1.60E+05 | 1.00E+01 | 3.60E+02 |
| Wheat | 1b | 3 | 66 | 100 | 1.20E+05 | <10 | 1.60E+02 |
| Wheat | 2 | 3 | 77 | 100 | 1.50E+05 | <10 | 1.50E+02 |
| Wheat | 3 | 3 | 77 | 97 | 1.80E+05 | <10 | 7.00E+01 |
| Wheat | 4 | 3 | 88 | 78 | 4.90E+04 | <10 | 4.00E+01 |
| Wheat | 4b | 3 | 88 | 75 | 9.00E+05 | <10 | 1.70E+02 |
| Wheat | 5 | 7 | 66 | 100 | 1.80E+05 | <10 | 2.10E+03 |
| Wheat | 6 | 7 | 77 | 93 | 6.40E+04 | <10 | 1.20E+02 |
| Wheat | 7 | 7 | 77 | 92 | 1.50E+05 | <10 | 1.00E+03 |
| Wheat | 8 | 7 | 88 | 15 | 8.30E+03 | <10 | <10 |
| Wheat | 9 | Ctrl | - | 100 | 1.30E+05 | 4.40E+03 | 1.00E+03 |

| | | | | | | | |
|---|---|---|---|---|---|---|---|
| * Germination Energy Number. | | | | | | | |
| ** Total Plate Count. | | | | | | | |

### EXAMPLE V - BARLEY

6-Row U.S. malting barley was treated in a conduit with direct and indirect heat. After the treatment, samples were cooled and dried to remove surface moisture. Samples were further analyzed.

| | Indirect Heat Jacket Temp.* | Direct Steam Temp. from Rotor* | Temp. of Product after Treatment* | Time (sec.) | Germination Energy 72 hrs. |
|---|---|---|---|---|---|
| Test a | 241 | 251 | 155 | 7.5 | 80 |
| Test b | 281 | 251 | 161 | 7.5 | 88 |
| Test c | 251 | 299 | 165 | 10.5 | 81 |
| Control | | | | | 91 |

| | | | | | |
|---|---|---|---|---|---|
| * Degrees Fahrenheit | | | | | |

| | T.P.C./gram | Yeasts/gram | Molds/gram |
|---|---|---|---|
| Test a | 3.00E+06 | 1.00E+01 | 7.00E+02 |
| Test b | 1.60E+06 | <10 | 5.00E+01 |
| Test c | 1.40E+07 | <10 | <10 |
| Control | 5.70E+06 | 2.10E+04 | 1.30E+04 |

## Claims

1. A malting process for a seed having a microbial load comprising the steps of:
heating the seed with moist heat which is effective for applying moisture on the surface of the seed and heating the seed for a time and temperature which will reduce the microbial count of the seed by at least a factor of 5 per gram of seed, but not reduce the germination energy of the seed after about 72 hours to less than about 80% to provide a seed with reduced microbial load;
wetting the seed with reduced microbial load to increase its moisture content to provide a wetted seed;
holding the wetted seed for a time and temperature to permit it to germinate and provide a malted seed, wherein a starter culture is mixed with seed with reduced microbial load before or after the wetting of the seed with reduced microbial load to provide a seed/starter culture blend, provided that the starter culture does not consist of lactic acid bacteria.

2. The malting process for a seed as recited in claim 1, wherein the moist heat is applied to the seed for a time in the range of from 1 second to 45 seconds to heat the seed surface to a temperature in the range of from 50°C to 90°C.

3. The malting process for a seed as recited in claim 1 or 2, wherein the moist heat is applied by exposing the seed to a heating fluidum having a temperature in the range of 60°C to 200°C.

4. The malting process for a seed as recited in claim 1 or 2, wherein the heating is done by injecting steam onto the seed.

5. The malting process for a seed as recited in claim 1, wherein the step of heating comprises conveying the seed as a continuous stream and heating the stream of seeds with moist heat.

6. The malting process for a seed as recited in claim 5, wherein steam is injected onto the continuously moving stream of seeds to provide surface moisture on the seed and heat the seed.

7. The malting process for a seed as recited in claim 6, wherein the continuously moving stream of seeds is moving on a pervious belt and has steam at a temperature of between 100°C and 200°C injected onto it as it proceeds along the belt to heat the seed for 3 to 30 seconds to a temperature of from 50°C to 90°C.

8. The malting process for a seed as recited in claim 1, wherein the step of heating comprises:
moving the seed through a conduit;
injecting steam onto the seed as it is being conveyed through the conduit to heat the seed and provide an increased moisture content onto the surface of the seed;
mixing the seed as it is being exposed to the steam and as it is being conveyed through the conduit and while the steam is being injected onto the seed.

9. The malting process for a seed as recited in claim 8, wherein the seed being conveyed through the conduit at a rate which is effective for heating the seed for 1 to 45 seconds to a temperature of from 50°C to 90°C as it leaves the conduit.

10. The malting process for a seed as recited in claim 1, wherein the step of heating comprises immersion the seed in water having a temperature of from 65°C to 95°C for 1 to 20 seconds.

11. The malting process for a seed as recited in claim 1, wherein the starter culture is selected from the group consisting of molds, yeasts, bacteria, spores, activated spores or any mixture thereof.

12. The malting process of the seeds as recited in claim 1 or 11 further comprising the step of holding the wetted seed/starter culture blend for a time and temperature to permit it to germinate and provide a malted seed which has an enzyme activity which is greater than an enzyme activity which is obtained by a malting process on the seed which does not have a reduced microbial load through the moist heat treatment thereof.

13. The malting process for a seed as recited in any of the claims 1 to 12 wherein the seed is selected from the group consisting of cereals, legumes and pseudocereals.

14. The malting process for a seed as recited in any of the claims 1 to 13 wherein the seed is selected from the group consisting of barley, soy, wheat and sorghum.

15. The malting process for a seed as recited in any of the claims 1 to 14, further comprising a kilning step.

16. The malting process for a seed as recited in any of the claims 1 to 15, further comprising a cooling step after the heating step.

17. The malting process for seed as recited in claim 1 to 16, wherein the microbial load which is reduced is selected from the group consisting of yeast and molds and mixtures thereof.

18. The malting process for seed as recited in claim 1 to 17, wherein the amount of toxins produced by the microbial load is reduced compared to the amount of toxins obtained by a malting process on seed which does not have a reduced microbial count through the moist heat treatment thereof.

## Patentansprüche

1. Mälzverfahren für einen Samen mit einer mikrobiellen Belastung, welches die folgenden Schritte umfaßt:
das Erwärmen des Samens mit feuchter Wärme, welche beim Aufbringen von Feuchtigkeit auf die Oberfläche des Samens und beim Erwärmen des Samens über einen Zeitraum und eine Temperatur, welche die mikrobielle Belastung des Samens mindestens um den Faktor 5 pro Gramm Samen reduzieren, aber die Keimfähigkeit des Samens nach etwa 72 Stunden nicht auf weniger als etwa 80 % reduzieren, wirksam ist, um einen Samen mit einer reduzierten mikrobiellen Belastung bereitzustellen;
das Befeuchten des Samens mit der reduzierten mikrobiellen Belastung, um seinen Feuchtigkeitsgehalt zu erhöhen und einen befeuchteten Samen bereitzustellen;
das Halten des befeuchteten Samens über einen Zeitraum und eine Temperatur, welche diesem erlauben zu keimen, um einen gemälzten Samen bereitstellen, wobei eine Starterkultur mit dem Samen mit reduzierter mikrobieller Belastung vor oder nach dem Befeuchten des Samens mit der reduzierten mikrobiellen Belastung gemischt wird, um eine Samen/Starterkultur-Mischung bereitzustellen, unter der Voraussetzung, daß die Starterkultur nicht aus Milchsäurebakterien besteht.

2. Mälzverfahren für einen Samen gemäß Anspruch 1, worin die feuchte Wärme auf den Samen über einen Zeitraum im Bereich von 1 Sekunde bis 45 Sekunden einwirkt, um die Samenoberfläche auf eine Temperatur im Bereich von 50°C bis 90°C zu erwärmen.

3. Mälzverfahren für einen Samen gemäß Anspruch 1 oder 2, worin die feuchte Wärme einwirkt, indem man den Samen einem Heizfluidum mit einer Temperatur im Bereich von 60°C bis 200°C aussetzt.

4. Mälzverfahren für einen Samen gemäß Anspruch 1 oder 2, worin das Mälzen durch Einspritzen von Dampf auf den Samen durchgeführt wird.

5. Mälzverfahren für einen Samen gemäß Anspruch 1, worin der Schritt des Erwärmens das Befördern des Samens als kontinuierlichen Strom und das Erwärmen des Samenstroms mit feuchter Wärme umfaßt.

6. Mälzverfahren für einen Samen gemäß Anspruch 5, worin Dampf auf den sich kontinuierlich bewegenden Samenstrom eingespritzt wird, um Oberflächenfeuchtigkeit auf dem Samen bereitzustellen und den Samen zu erwärmen.

7. Mälzverfahren für einen Samen gemäß Anspruch 6, worin der sich kontinuierlich bewegende Samenstrom sich auf einem durchlässigen Band bewegt und Dampf mit einer Temperatur von 100°C bis 200°C aufweist, der darauf eingespritzt wird, während er längs des Bandes voranschreitet, um den Samen 3 bis 30 Sekunden auf eine Temperatur von 50°C bis 90°C zu erwärmen.

8. Mälzverfahren für einen Samen gemäß Anspruch 1, worin der Schritt des Erwärmens umfaßt:
das Bewegen des Samens durch einen Kanal;
das Einspritzen von Dampf auf den Samen, während er durch den Kanal befördert wird, um den Samen zu erwärmen und einen erhöhten Feuchtigkeitsgehalt auf der Oberfläche des Samens bereitzustellen;
das Mischen des Samens, während er dem Dampf ausgesetzt ist und während er durch den Kanal gefördert wird und während der Dampf auf den Samen eingespritzt wird.

9. Mälzverfahren für einen Samen gemäß Anspruch 8, worin der Samen durch den Kanal mit einer Geschwindigkeit befördert wird, die zum Erwärmen des Samens über 1 bis 45 Sekunden auf eine Temperatur von 50°C bis 90°C beim Verlassen des Kanals wirksam ist.

10. Mälzverfahren für einen Samen gemäß Anspruch 1, worin der Schritt des Erwärmens das Eintauchen des Samens in Wasser mit einer Temperatur von 65°C bis 95°C über 1 bis 20 Sekunden umfaßt.

11. Mälzverfahren für einen Samen gemäß Anspruch 1, worin die Starterkultur ausgewählt wird aus der Gruppe bestehend aus Schimmeln, Hefen, Bakterien, Sporen, aktivierten Sporen und Mischungen davon.

12. Mälzverfahren für einen Samen gemäß Anspruch 1 oder 11, welches ferner den Schritt umfaßt, die befeuchtete Samen/Starterkultur-Mischung über einen Zeitraum und eine Temperatur zu halten, die ihr gestattet, zu keimen und einen gemälzten Samen bereitzustellen, der eine Enzymaktivität aufweist, die größer ist als eine Enzymaktivität, die man durch ein Mälzverfahren mit einem Samen erhält, der keine reduzierte mikrobielle Belastung in Folge der Behandlung mit feuchter Wärme aufweist.

13. Mälzverfahren für einen Samen gemäß einem der Ansprüche 1 bis 12, worin der Samen aus der Gruppe bestehend aus Getreide, Gemüse und Pseudogetreide ausgewählt wird.

14. Mälzverfahren für einen Samen gemäß einem der Ansprüche 1 bis 13, worin der Samen aus der Gruppe bestehend aus Gerste, Soja, Weizen und Hirse ausgewählt wird.

15. Mälzverfahren für einen Samen gemäß einem der Ansprüche 1 bis 14, welches ferner einen Darrschritt umfaßt.

16. Mälzverfahren für einen Samen gemäß einem der Ansprüche 1 bis 15, welches ferner einen Kühlschritt nach dem Erwärmungsschritt umfaßt.

17. Mälzverfahren für einen Samen gemäß einem der Ansprüche 1 bis 16, worin die mikrobielle Belastung, die reduziert wird, ausgewählt wird aus der Gruppe bestehend aus Hefen und Schimmeln und Mischungen davon.

18. Mälzverfahren für einen Samen gemäß Anspruch 1 bis 17, worin die Menge der durch die mikrobielle Belastung produzierten Toxine reduziert wird im Vergleich zu der Menge an Toxinen, die man in einem Mälzverfahren mit Samen erhält, welche keine reduzierte Mikrobenzahl durch eine Behandlung mit feuchter Wärme aufweisen.

## Revendications

1. Procédé de maltage d'un grain ayant une charge microbienne, comprenant les étapes de :
chauffage du grain avec de la chaleur humide qui est efficace pour appliquer de l'humidité sur la surface du grain et chauffer le grain pendant un temps et à une température qui réduisent le nombre de microbes du grain d'un facteur d'au moins 5 par gramme de grain, mais ne réduisent pas à moins d'environ 80 % l'énergie germinative du grain après environ 72 heures, pour produire un grain à charge microbienne réduite ;
mouillage du grain à charge microbienne réduite afin d'augmenter sa teneur en humidité pour produire un grain mouillé ;
maintien du grain mouillé pendant un temps et à une température qui lui permettent de germer et de produire un grain malté, dans lequel une culture de ferment est mélangée avec le grain à charge microbienne réduite avant ou après le mouillage du grain à charge microbienne réduite pour produire un mélange de grain/culture de ferment, à condition que la culture de ferment ne consiste pas en bactéries lactiques.

2. Procédé de maltage d'un grain selon la revendication 1, dans lequel la chaleur humide est appliquée au grain pendant un temps compris dans l'intervalle de 1 seconde à 45 secondes pour chauffer la surface du grain à une température comprise dans l'intervalle de 50°C à 90°C.

3. Procédé de maltage d'un grain selon la revendication 1 ou 2, dans lequel la chaleur humide est appliquée en exposant le grain à un fluide chauffant ayant une température comprise dans l'intervalle de 60°C à 200°C.

4. Procédé de maltage d'un grain selon la revendication 1 ou 2, dans lequel le chauffage est effectué par injection de vapeur d'eau sur le grain.

5. Procédé de maltage d'un grain selon revendication 1, dans lequel l'étape de chauffage transporter le grain sous forme d'un courant continu et à chauffer le courant de grains avec de la chaleur humide.

6. Procédé de maltage d'un grain selon la revendication 5, dans lequel la vapeur d'eau est injectée sur le courant de grains en déplacement continu pour apporter de l'humidité de surface sur le grain et chauffer le grain.

7. Procédé de maltage d'un grain selon la revendication 6, dans lequel le courant de grains en déplacement continu est en déplacement sur une courroie perméable et de la vapeur d'eau à une température comprise entre 100°C et 200°C est injectée sur lui tandis qu'il avance avec la courroie pour chauffer le grain pendant 3 à 30 secondes à une température de 50°C à 90°C.

8. Procédé de maltage d'un grain selon la revendication 1, dans lequel l'étape de chauffage comprend :
le déplacement du grain à travers un conduit ;
l'injection de vapeur d'eau sur le grain tandis qu'il est transporté à travers le conduit pour chauffer le grain et fournir une teneur en humidité accrue sur la surface du grain ;
le mélange du grain tandis qu'il est exposé à la vapeur d'eau et tandis qu'il est transporté à travers le conduit et pendant que la vapeur d'eau est injectée sur le grain.

9. Procédé de maltage d'un grain selon la revendication 8, dans lequel le grain est transporté à travers le conduit à une vitesse qui est efficace pour chauffer le grain pendant 1 à 45 secondes à une température de 50°C à 90°C lorsqu'il quitte le conduit.

10. Procédé de maltage d'un grain selon la revendication 1, dans lequel l'étape de chauffage comprend l'immersion du grain dans de l'eau ayant une température de 65°C à 95°C pendant 1 à 20 secondes.

11. Procédé de maltage d'un grain selon la revendication 1, dans lequel la culture de ferment est choisie dans le groupe formé par les moisissures, les levures, les bactéries, les spores, les spores activées ou tout mélange d'entre elles.

12. Procédé de maltage de grains selon la revendication 1 ou 11, comprenant de plus l'étape de maintien du mélange de grain mouillé/culture de ferment pendant un temps et à une température qui lui permettent de germer et de produire un grain germé ayant une activité enzymatique supérieure à une activité enzymatique obtenue par un procédé de maltage exécuté sur le grain dont la charge microbienne n'a pas été réduite par son traitement à la chaleur humide.

13. Procédé de maltage d'un grain selon l'une quelconque des revendications 1 à 12, dans lequel le grain est choisi dans le groupe formé par les céréales, les légumineuses et les pseudo-céréales.

14. Procédé de maltage d'un grain selon l'une quelconque des revendications 1 à 13, dans lequel le grain est choisi dans le groupe formé par l'orge, le soja, le blé et le sorgho.

15. Procédé de maltage d'un grain selon l'une quelconque des revendications 1 à 14, comprenant de plus une étape de touraillage.

16. Procédé de maltage d'un grain selon l'une quelconque des revendications 1 à 15, comprenant de plus une étape de refroidissement après l'étape de chauffage.

17. Procédé de maltage de grain selon les revendications 1 à 16, dans lequel la charge microbienne qui est réduite est choisie dans le groupe formé par les levures et les moisissures et leurs mélanges.

18. Procédé de maltage de grain selon les revendications 1 à 17, dans lequel la quantité de toxines produites par la charge microbienne est réduite comparativement à la quantité de toxines obtenues par un procédé de maltage exécuté sur un grain dont le nombre de microbes n'a pas été réduit par son traitement à la chaleur humide.
